(19) Europäisches Patentamt
European Patent Office
Office européen des brevets

(11) EP 1 663 470 B1

(12) FASCICULE DE BREVET EUROPEEN

(45) Date de publication et mention de la délivrance du brevet:
**05.01.2011 Bulletin 2011/01**

(21) Numéro de dépôt: **04787384.9**

(22) Date de dépôt: **15.09.2004**

(51) Int Cl.:
***B01J 13/00*** *(2006.01)* ***C09K 11/08*** *(2006.01)*
***C01B 25/26*** *(2006.01)* ***C09K 11/02*** *(2006.01)*

(86) Numéro de dépôt international:
**PCT/FR2004/002340**

(87) Numéro de publication internationale:
**WO 2005/028094 (31.03.2005 Gazette 2005/13)**

(54) **DISPERSION COLLODALE D UN PHOSPHATE DE TERRE RARE ET SON PROCEDE DE PREPARATION**

KOLLOIDALE SELTENERDMETALLPHOSPHATDISPERSION UND VERFAHREN ZU IHRER HERSTELLUNG

RARE-EARTH PHOSPHATE COLLOIDAL DISPERSION AND ITS PREPARATION METHOD

(84) Etats contractants désignés:
**AT BE BG CH CY CZ DE DK EE ES FI FR GB GR HU IE IT LI LU MC NL PL PT RO SE SI SK TR**

(30) Priorité: **18.09.2003 FR 0310968**

(43) Date de publication de la demande:
**07.06.2006 Bulletin 2006/23**

(73) Titulaires:
- **Rhodia Electronics and Catalysis
17041 La Rochelle Cedex (FR)**
- **CENTRE NATIONAL DE
LA RECHERCHE SCIENTIFIQUE (CNRS)
75794 Paris Cedex 16 (FR)**

(72) Inventeurs:
- **BOILOT, Jean-Pierre
F-92360 Meudon La Forêt (FR)**
- **BUISSETTE, Valérie
F-75015 PARIS (FR)**
- **CHANE-CHING, Jean-Yves
F-95600 Eaubonne (FR)**
- **GACOIN, Thierry
F-91440 Bures-sur-Yvette (FR)**
- **LE MERCIER, Thierry
F-75013 Paris (FR)**

(74) Mandataire: **Dubruc, Philippe
Rhodia Services
Direction de la Propriété Industrielle
40 Rue de la Haie-Coq
93306 Aubervilliers Cedex (FR)**

(56) Documents cités:
**WO-A-02/45840 WO-A-02/45841
WO-A-02/057183 WO-A-03/022743
US-A1- 2003 032 192**

- **HAASE M ET AL: "Synthesis and properties of colloidal lanthanide-doped nanocrystals" JOURNAL OF ALLOYS AND COMPOUNDS, ELSEVIER SEQUOIA, LAUSANNE, CH, vol. 303-304, mai 2000 (2000-05), pages 191-197, XP004204357 ISSN: 0925-8388**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 663 470 B1

## Description

La présente invention concerne une dispersion colloïdale d'un phosphate de terre rare, et son procédé de préparation. Un matériau transparent luminescent peut être obtenu à partir de cette dispersion.

Les phosphates de terre rare sont connus pour leur propriété de luminescence. Ils sont aussi utilisés, sous forme de dispersions colloïdales, dans l'industrie électronique comme agent de polissage.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage. Ces nouvelles applications nécessitent des matériaux luminophores présentant des propriétés de plus en plus améliorées. Ainsi, outre leur propriété de luminescence, on demande à ces matériaux des caractéristiques spécifiques de morphologie ou de granulométrie afin de faciliter notamment leur mise en oeuvre dans les applications recherchées.

Plus précisément, il est demandé d'avoir des luminophores se présentant sous la forme de particules le plus possible individualisées et de taille très fine.

Par ailleurs et toujours dans le cadre du développement dans les domaines de la luminescence et de l'électronique, on cherche à obtenir des matériaux, sous forme de films, transparents et pouvant émettre dans différentes couleurs mais aussi dans le blanc.

Les sols ou dispersions colloïdales peuvent constituer une voie d'accès intéressante à un tel type de produits.

WO 02/45480 décrit bien une dispersion colloïdale de particules de phosphate de terre rare obtenue par un procédé mettant en oeuvre un complexant ou un anion d'un acide monovalent de type organique. Mais la présence d'un composé organique sur les particules peut perturber les propriétés de luminescence de celles-ci.

Un objet de invention est de fournir un phosphate de terre rare, sous forme d'une dispersion colloïdale.

Dans ce but, la dispersion colloïdale de l'invention est **caractérisée en ce qu**'elle comprend des particules constituées de phosphate d'une ou plusieurs terres rares de structure rhabdophane et d'au moins un polyphosphate lié à celles-ci, les particules ainsi constituées présentant un rapport molaire P/Ln supérieur à 1; les particules étant :

- des particules d'un phosphate de terre rare (Ln); ou
- des particules présentant une structure coeur/coquille dans laquelle le coeur est constitué d'un phosphate d'au moins deux terres rares (Ln, Ln') et la coquille d'un phosphate de terre rare (Ln); ou
- des particules présentant une structure coeur/coquille dans laquelle le coeur est constitué d'un phosphate de terre rare (Ln) et la coquille d'un composé à base de silice; ou
- des particules présentant une structure coeur/coquille dans laquelle le coeur est constitué d'un phosphate de terre rare (Ln) et la coquille d'un composé à base de silice et d'un composé polymérique de type organosiloxane.

Un matériau transparent luminescent préparé à partir d'une dispersion selon l'invention et, selon un premier mode de réalisation, à base de particules d'un phosphate de terre rare (Ln) et dans lequel le rapport molaire P/Ln est supérieur à 1 est aussi décrit.

Un matériau transparent luminescent préparé à partir d'une dispersion selon l'invention et, selon un second mode de réalisation, qui est **caractérisé en ce qu**'il comprend des particules nanométriques de composés choisis parmi les vanadates, les phosphates de terre rare, les tungstates et les oxydes de terre rare et en ce qu'il est capable d'émettre, lorsqu'il est soumis à une excitation, une lumière blanche dont les coordonnées trichromatiques sont comprises dans le polyèdre suivant du diagramme de chromaticité défini par la CIE : (x=0,16; y=0,10); (x=0,16; y=0,4); (x=0,51; y=0,29), (x=0,45; y=0,42) est aussi décrit.

D'autres caractéristiques, détails et avantages de l'invention apparaîtront encore plus complètement à la lecture de la description qui va suivre, ainsi que des divers exemples concrets mals non limitatifs destinés à l'illustrer.

Par terre rare (Ln) ou lanthanide on entend les éléments du groupe constitué par l'yttrium et les éléments de la classification périodique de numéro atomique compris inclusivement entre 57 et 71.

On précise pour la suite de la description que, sauf indication contraire, dans les fourchettes de valeurs qui sont données, les valeurs aux bornes sont incluses.

L'invention s'applique à des dispersions ou des sols de particules de phosphate d'une ou plusieurs terres rares. On entend ici des particules à base essentiellement d'orthophosphates, généralement hydratés et de formule $LnPO_4$, $nH_2O$, Ln désignant une ou plusieurs terres rares, n étant habituellement compris entre 0 et 1, plus particulièrement entre 0 et 0,5, n pouvant être encore plus particulièrement égal à 0,5.

Par ailleurs, pour la suite de la description, l'expression dispersion colloïdale ou sol d'un phosphate de terre rare désigne tout système constitué de fines particules solides de dimensions colloïdales à base généralement d'un phosphate de terre rare au sens donné ci-dessus, qui peut être hydraté, et en suspension dans une phase liquide. Ces particules peuvent aussi, éventuellement, contenir des quantités résiduelles d'ions liés ou adsorbés qui peuvent provenir des sels de terre rare utilisés dans la préparation de la dispersion tels que par exemple des anions nitrates, acétates,

chlorures, citrates, ammoniums ou des ions sodium ou encore des anions phosphates ($HPO_4^{2-}$, $PO_4^{3-}$, $P_3O_{10}^{5-}$...). On notera que dans de telles dispersions, la terre rare peut se trouver soit totalement sous la forme de colloïdes, soit simultanément sous la forme d'ions, d'ions complexés et de colloïdes. De préférence, au moins 80%, voire 100% de la terre rare se trouve sous forme colloïdale.

Le phosphate se présente sous une structure rhabdophane (Structure hexagonale, Groupe d'espace P $6_222$ ( numéro 180); Fiche JCPDS 46-1439).

La taille des cristallites déterminée par diffraction des rayons X sur des poudres de particules et en utilisant la méthode de Scherrer est généralement inférieure à 30 nm, plus particulièrement à 20 nm, de préférence inférieure à 10 nm et encore plus préférentiellement d'au plus 8 nm.

Les dispersions de l'invention sont du type nanométrique. On entend par-là des dispersions dont les colloïdes sont généralement d'une taille d'au plus 250 nm environ, notamment d'au plus 100 nm, de préférence d'au plus 20 nm et encore plus particulièrement d'au plus 15 nm. Les particules colloïdales peuvent notamment présenter une taille comprise entre environ 5 nm et environ 20 nm.

Les tailles précitées correspondent à des diamètres hydrodynamiques moyens et tels que déterminés par diffusion quasi-élastique de la lumière selon la méthode décrite par Michael L. Mc CONNELL dans la revue Analytical Chemistry 53, n° 8, 1007 A, (1981).

En outre, selon un mode de réalisation préférentiel, les particules colloïdales sont isotropes ou substantiellement isotropes en ce qui concerne leur morphologie. Leur forme se rapproche en effet de celle d'une sphère (morphologie totalement isotrope) par opposition aux particules de forme aciculaire ou plaquettaire.

Plus précisément, les particules peuvent présenter un rapport L/l d'au plus 5, de préférence d'au plus 4 et encore plus particulièrement d'au plus 3, L désignant la plus grande longueur de la particule et l désignant la plus petite.

La présente invention s'applique tout particulièrement au cas où la terre rare est le lanthane, le cérium, l'europium, le gadolinium, le terbium, le lutécium ou l'yttrium. Par ailleurs, comme indiqué plus haut, les phosphates de l'invention peuvent comprendre plusieurs terres rares, tout particulièrement dans le cas où les phosphates doivent présenter des propriétés de luminescence. Dans ce cas, les phosphates comprennent une première terre rare qui peut être considérée comme un élément constitutif de l'orthophosphate et une ou plusieurs autres terres rares, habituellement désignée(s) par le terme de « dopant » et qui est ou sont à l'origine de ces propriétés de luminescence. La quantité minimale de dopant est la quantité nécessaire pour obtenir lesdites propriétés.

L'invention s'applique ainsi en particulier aux dispersions colloïdales de phosphates ternaires de lanthane, de cérium et de terbium. Pour ces phosphates ternaires, on peut citer plus particulièrement ceux de formule $La_xCe_yTb_{1-x-y}PO_4$ dans laquelle x est compris inclusivement entre 0,4 et 0,7 et x+y est supérieur à 0,7.

L'invention s'applique aussi notamment aux phosphates mixtes de lanthane et d'europium ou encore de lanthane et de thulium ou de lanthane, de thulium et de gadolinium. Pour les phosphates contenant du thulium, la teneur en thulium, exprimée en % atomique par rapport au lanthane, peut être comprise notamment entre 0,1 et 10, plus particulièrement entre 0,5 et 5, et pour ceux contenant du gadolinium, la teneur en ce dernier élément, exprimée en % atomique par rapport au lanthane, peut varier par exemple entre 10 et 40%.

L'invention s'applique aussi aux phosphates de lanthane et de cérium ainsi que de lanthane et de dysprosium. Dans le cas des phosphates de lanthane et de cérium, la teneur en cérium peut être plus particulièrement comprise entre 20% et 50%, teneur exprimée en % atomique de cérium par rapport à la somme des atomes de cérium et de lanthane.

Lorsque le phosphate contient du cérium, tout particulièrement dans le cas d'un phosphate à propriétés de luminescence, le cérium est sous forme de cérium III pour au moins 90% du cérium total, de préférence pour au moins 95%.

Selon une autre caractéristique, la dispersion de l'invention comprend en outre un polyphosphate. Par polyphosphate, on entend dans la présente description un composé dont la structure est constituée par un assemblage de tétraèdres $PO_4^{3-}$, ces tétraèdres pouvant être assemblés soit en chaînes linéaires sous la forme

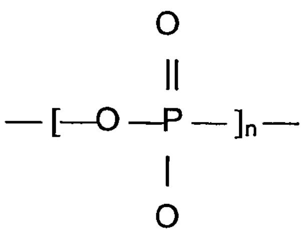

n étant au moins égal à 2,

soit encore en cycles par fermeture sur elles-mêmes de ces chaînes pour constituer des métaphosphates cycliques.

Les polyphosphates décrits ci-dessus peuvent notamment correspondre à, ou être issus de phosphates de

métaux monovalents, divalents ou trivalents et en particulier de métaux alcalins. Ces phosphates peuvent être des composés répondant notamment à la formule (1) :

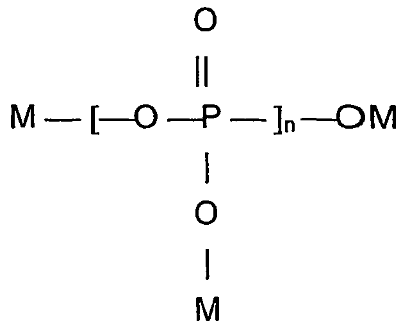

ou $M_{n+2}P_nO_{3n+1}$ pour les composés linéaires ou encore $(MPO_3)_m$ pour les composés cycliques, formules dans lesquelles M représente un métal monovalent, OM pouvant aussi être remplacé par un groupement organique et au moins un des M par de l'hydrogène.

A titre d'exemple de polyphosphate on peut mentionner les tripolyphosphates (n = 3) issus notamment des composés de formule (1), les hexamétaphosphates issus des composés $(MPO_3)_6$, pour lesquels M est un alcalin, en particulier le sodium. On peut aussi mentionner le triphosphate d'adénosine $C_{10}H_6O_{13}N_5P_3$.

La présence d'un polyphosphate du type ci-dessus, peut être mise en évidence par RMN MAS à 15kHz du phosphore $^{31}P$ sur une poudre de particules. Le spectre RMN montre la présence d'un premier pic correspondant à un déplacement chimique attribuable à l'orthophosphate constitutif des particules et d'au moins deux autres pics correspondant à des déplacements chimiques attribuables au composé polyphosphate. Ces déplacements chimiques dépendent fortement du rapport polyphosphate/terre rare et du pH.

De plus, la largeur de ces pics polyphosphates suggère la présence de ce polyphosphate en surface des particules, lié à celles-ci, vraisemblablement par complexation et sous la forme anionique. La phase liquide de la dispersion peut éventuellement comprendre aussi du polyphosphate mais en quantité faible par rapport à la quantité de polyphosphate lié aux particules.

Compte tenu de la présence du polyphosphate, les particules de phosphate des dispersions de l'invention présentent un rapport molaire P/Ln supérieur à 1. Ce rapport peut être d'au moins 1,1, notamment d'au moins 1,2 et encore plus particulièrement d'au moins 1,5. Il peut être par exemple compris entre 1,1 et 2.

Les dispersions selon l'invention sont généralement des dispersions aqueuses, la phase continue étant l'eau. Toutefois, selon certaines variantes, les dispersions de l'invention peuvent présenter une phase continue hydroalcoolique à base d'un mélange d'eau et d'alcool, une phase continue alcoolique ou encore une phase continue constituée par un solvant organique. On peut citer comme alcool possible, le méthanol, l'éthanol ou le propanol.

Les dispersions de l'invention peuvent présenter une concentration qui varie dans une large gamme. Cette concentration peut être d'au moins 20 g/l, plus particulièrement d'au moins 50 g/l et encore plus particulièrement d'au moins 100 g/l. Cette concentration est exprimée en masse de particules. Elle est déterminée après séchage et calcination sous air d'un volume donné de dispersion.

Les dispersions de l'invention peuvent présenter un pH qui peut être par exemple compris entre 5 et 9.

Les dispersions colloïdales de l'invention peuvent se présenter aussi sous la forme de différentes variantes qui vont être décrites ci-dessous.

La première variante concerne des dispersions qui comprennent des particules d'un phosphate d'au moi ns deux terres rares (Ln, Ln'), un phosphate de terre rare (Ln) et un polyphosphate en surface de ces particules, cet ordre de disposition dans le sens de la particule vers l'extérieur étant préférentiel. Cette variante s'applique tout particulièrement aux phosphates à propriété de luminescence décrits plus haut et comprenant deux terres rares dont l'une (Ln) est un élément constitutif de l'orthophosphate (Ln pouvant être notamment le lanthane) et l'autre, (Ln'), est présente à titre de dopant (Ln' pouvant être notamment le cérium et/ou le terbium). Dans le cas de cette variante, le rapport molaire P/Ln des particules est tel que donné précédemment, c'est à dire supérieur à 1 et par exemple compris entre 1,1 et 2.

Cette variante permet d'avoir des particules présentant une structure coeur/coquille, ou une structure proche de celle-ci, dans laquelle le coeur est constitué par le phosphate d'au moins deux terres rares (Ln, Ln') et la coquille par le phosphate de terre rare (Ln). Cette même variante a pour intérêt notamment de stabiliser chimiquement le dopant lorsque cela est nécessaire. Par exemple dans le cas du cérium, cette variante permet de stabiliser celui-ci sous la forme III. On notera enfin que cette variante peut être mise en oeuvre avec comme coquille un phosphate de deux terres rares, Ln, Ln" au lieu du simple phosphate de Ln.

La seconde variante concerne des dispersions qui comprennent un composé à base de silice en surface des particules du phosphate de terre rare. Par composé à base de silice on entend un silicate ou un mélange d'un silicate et de silice ($SiO_2$).

Cette seconde variante permet aussi d'avoir des particules présentant une structure coeur/coquille dans lesquelles le coeur est constitué par le phosphate de terre rare et la coquille par la couche de composé à base de silice.

Une troisième variante est possible qui est issue de la seconde. Dans le cas de cette troisième variante, la dispersion comprend, outre le composé à base de silice précité, un composé polymérique de type organosiloxane en surface des particules du phosphate de terre rare. Par composé polymérique de type organosiloxane, on entend un produit issu de la polymérisation d'un composé de type organosilane et de formule $R_xSi(OR')_{4-x}$, R et R' désignant des groupements organiques, plus particulièrement des groupements alkyls, méthacrylate ou époxy, R pouvant aussi désigner l'hydrogène.

On peut préciser que dans le cas de la seconde et de la troisième variante, le pH de la dispersion, dans le cas d'une dispersion aqueuse, peut se situer entre 8 et 10.

Les seconde et troisième variantes ont notamment comme avantage d'améliorer la compatibilité des dispersions entre elles, c'est à dire qu'elles permettent de faire des mélanges de dispersions selon l'invention et d'obtenir une nouvelle dispersion mixte colloïdale stable. En outre, les dispersions selon ces deux variantes peuvent tout particulièrement être en phase hydroalcoolique ou alcoolique ou encore en phase solvant. Dans ce dernier cas, on peut citer comme solvant le DMF, le THF ou le DMSO.

Naturellement, les variantes qui ont été décrites ci-dessus peuvent être combinées entre elles. Ainsi, les particules des dispersions de l'invention peuvent comprendre, en surface, un phosphate de terre rare et un composé à base de silice, cet ordre de disposition dans le sens de la particule vers l'extérieur étant préférentiel, éventuellement en combinaison avec un composé polymérique de type organosiloxane.

Les dispersions selon l'invention sont stables et, en fonction de la nature du phosphate, elles peuvent être luminescentes lorsqu'elles sont soumises à une excitation. Par excitation, on entend ici une excitation photonique sous une longueur d'onde d'au plus 380 nm, notamment comprise entre 140 nm et 380 nm, plus particulièrement entre 200 nm et 380 nm. Elles émettent dans des couleurs qui sont fonction de la composition du phosphate. Ainsi, celles à base de phosphate de lanthane et de cérium émettent en partie dans le bleu, celles à base de phosphate de lanthane, de cérium et de terbium en partie dans le vert, celles à base de phosphate de lanthane et d'europium en partie dans le rouge et celles à base de phosphate de lanthane et de dysprosium dans le jaune.

Ces dispersions sont aussi transparentes.

La transparence est caractérisée par la transmission T à travers le milieu considéré (rapport de l'intensité transmise sur l'intensité incidente dans le domaine visible : entre 380 et 770 nm). La transmission est directement mesurée par la technique de spectroscopie UV-visible en utilisant des échantillons dont la fraction volumique $c_v$ en particules dans le milieu est au moins de 1% (rapport du volume occupé par les particules [particules de phosphate avec le polyphosphate et éventuellement le composé à base de silice et le composé polymérique] sur le volume total).

Dans ces conditions expérimentales, les dispersions de l'invention et les films présentent une transmission pour une épaisseur d'un micron d'au moins 95% et de préférence d'au moins 99%.

La transmission T est reliée au coefficient d'absorption $\varepsilon_v$ exprimé en $cm^{-1}$, par la formule :

$$-\log_{10}T=\varepsilon_v l c_v$$

où l test l'épaisseur de l'échantillon exprimée en cm. Dans les conditions expérimentales précédentes, les dispersions de l'invention et les films présentent ainsi un coefficient d'absorption d'au plus 160 $cm^{-1}$ et de préférence d'au plus 40 $cm^{-1}$.

Le procédé de préparation des dispersions de l'invention va maintenant être décrit.

Ce procédé est **caractérisé en ce qu**'il comporte les étapes suivantes :

- on forme un milieu comprenant au moins un sel de terre rare et un polyphosphate dans des quantités telles que le rapport P/Ln soit d'au moins 3;
- on chauffe le milieu ainsi obtenu;
- on élimine les sels résiduels ce par quoi on obtient une dispersion.

Les sels de terre rare peuvent être des sels d'acides inorganiques ou organiques, par exemple du type sulfate, nitrate, chlorure ou acétate. On notera que le nitrate et l'acétate conviennent particulièrement bien. Comme sels de cérium, on peut utiliser plus particulièrement ceux de cérium III comme l'acétate de cérium III, le chlorure de cérium III ou le nitrate de cérium III ainsi que des mélanges de ces sels comme des mixtes acétate / chlorure.

Comme indiqué plus haut, le polyphosphate mis en oeuvre dans cette première étape du procédé peut être

plus particulièrement un tripolyphosphate, notamment un tripolyphosphate alcalin, plus particulièrement un tripolyphosphate de sodium.

Le milieu est généralement un milieu aqueux.

Dans le milieu réactionnel, le rapport molaire P/Ln (Ln désignant l'ensemble des terres rares présentes dans le milieu) doit être d'au moins 3. Un rapport inférieur ne permet pas d'obtenir une dispersion stable. La limite supérieure de ce rapport est moins critique, elle peut être par exemple fixée à 6.

On forme de préférence le milieu réactionnel en introduisant le polyphosphate dans la solution du ou des sels de terre rare.

L'étape suivante du procédé est une étape de chauffage. La durée du chauffage est d'environ 2 à 10 heures, plus particulièrement de 2 à 5 heures.

La température du chauffage est généralement comprise entre 60°C et 120°C, plus particulièrement entre 60°C et 100°C.

La durée et la température sont choisies de manière à avoir une bonne cristallisation des particules.

A l'issue du chauffage, on procède à une étape de purification dans laquelle on élimine du milieu réactionnel les sels résiduels. Par sels résiduels, on entend les cations associés au polyphosphate, le polyphosphate en excès et les sels de terres rares.

Cette purification peut être obtenue en centrifugeant la dispersion puis en lavant à l'eau déminéralisée le produit solide obtenu à l'issue de la centrifugation. Le solide lavé est remis ensuite en suspension dans l'eau.

Cette purification peut se faire aussi par ultrafiltration ou dialyse.

La purification est conduite jusqu'à l'obtention d'un rapport molaire P/Ln d'au plus 2, ce rapport étant mesuré sur les colloïdes obtenus après évaporation de la dispersion. Après purification, on obtient une dispersion selon l'invention.

Cette dispersion peut être concentrée si nécessaire.

La concentration peut se faire par ultrafiltration, par chauffage sous vide primaire ou par évaporation.

Selon un mode de mise en oeuvre particulier du procédé qui vient d'être décrit, il est possible, à l'issue de l'étape d'élimination des sels résiduels, d'ajouter à la dispersion obtenue un second polyphosphate, de préférence un polyphosphate de longueur de chaîne plus importante que celle du polyphosphate utilisé lors de la première étape du procédé. Après l'addition de ce second polyphosphate, on élimine ensuite les sels résiduels. Ce qui a été décrit plus haut pour cette opération s'applique aussi ici. A titre d'exemple, le second polyphosphate peut être un hexarnétaphosphate alcalin comme l'hexamétaphosphate de sodium. La quantité de second polyphosphate ajoutée est généralement comprise entre 0,05 et 1, exprimée en rapport molaire polyphosphate/Ln.

Cette mise en oeuvre particulière du procédé permet d'obtenir des dispersions qui sont plus concentrées et plus stables.

Pour préparer une dispersion selon la première variante qui a été décrite précédemment, on peut partir d'une dispersion telle qu'obtenue selon le procédé qui a été donné plus haut et on y ajoute un polyphosphate. On chauffe ensuite le milieu obtenu. La température de chauffage est généralement comprise entre 40°C et 80°C. Dans une étape suivante, on ajoute au milieu réactionnel un sel de la terre rare Ln dans des quantités telles que le rapport molaire P/Ln soit d'au moins 3 et de préférence égal à 6, Ln désignant ici la terre rare constitutive de l'orthophosphate. Cette addition se fait de préférence lentement.

A l'issue de cette addition, on effectue un deuxième chauffage du.milieu obtenu dans les mêmes conditions que celles données plus haut dans la description du mode général de mise en oeuvre du procédé, à savoir notamment dans une gamme de température comprise entre 60°C et 120°C. A l'issue de ce chauffage, on procède aussi comme décrit précédemment en éliminant les sels résiduels et en concentrant si nécessaire.

En ce qui concerne la préparation d'une dispersion selon la seconde variante décrite plus haut, on peut mettre en oeuvre le procédé qui comprend les étapes suivantes :

- on ajoute un silicate à une dispersion de départ telle qu'obtenue par les procédés décrit plus haut;
- on fait subir un mûrissement au milieu ainsi obtenu;
- on élimine les sels résiduels.

On notera qu'il est possible d'utiliser comme dispersion de départ une dispersion selon la première variante et donc telle qu'obtenue par le procédé qui vient d'être décrit ci-dessus au sujet de cette première variante.

De préférence on procède en ajoutant la dispersion au silicate.

Comme silicate on peut utiliser un silicate alcalin, par exemple un silicate de sodium. On peut aussi mentionner le silicate de tétraméthylammonium. La quantité de silicate introduite est généralement de 2 à 20 équivalents de Si par rapport aux ions Ln totaux.

Le mûrissement est conduit généralement à température ambiante, de préférence sous agitation. La durée du mûrissement peut être par exemple comprise entre 10 heures et 25 heures.

A l'issue du mûrissement, on élimine les sels résiduels. Par sels résiduels on entend le silicate ou les autres

sels en excès. Cette élimination peut se faire par dialyse du milieu issu du mûrissement par exemple ou encore par ultracentrifugation ou ultrafiltration. On peut procéder à cette purification jusqu'à obtenir une valeur de pH d'au plus 9 par exemple.

Les dispersions selon la troisième variante peuvent être obtenues à partir des dispersions selon la seconde variante et donc telles qu'obtenues par le procédé qui vient d'être décrit ci-dessus au sujet de cette seconde variante. Ainsi, on ajoute une dispersion de ce type à un composé de type organosilane tel que décrit précédemment. Ce composé est habituellement utilisé sous forme d'une solution dans un alcool. Dans une deuxième étape on effectue un mûrissement du milieu obtenu. Ce mûrissement se fait généralement à une température d'au moins 40°C, par exemple compris entre 40°C et 100°C. Il peut être fait par chauffage à reflux du milieu. Il est possible de procéder enfin à une distillation pour éliminer l'eau dans le cas de la présence d'un alcool apporté avec la solution du composé organosilane.

Pour l'obtention d'une dispersion en phase hydroalcoolique, on peut ajouter l'alcool souhaité à la dispersion aqueuse telle qu'obtenue par le procédé concernant la seconde variante. Le procédé pour la troisième variante permet tel qu'il a été décrit ci-dessus d'obtenir aussi une dispersion hydroalcoolique. La distillation permet dans ces cas d'obtenir une phase continue à base d'un alcool seul. Il est enfin possible d'ajouter à la phase alcool un solvant organique du type décrit plus haut (DMF, THF, DMSO) puis d'éliminer l'alcool par distillation.

Un matériau transparent luminescent selon le premier mode de réalisation défini plus haut, c'est à dire un matériau à base d'un phosphate et un matériau dans lequel le rapport molaire P/Ln est supérieur à 1, peut être obtenu notamment à partir d'une dispersion selon l'invention.

Ce matériau peut se présenter sous deux formes, c'est à dire soit sous une forme massique, l'ensemble du matériau présentant les propriétés de transparence et de luminescence soit sous une forme composite, c'est à dire dans ce cas sous la forme d'un substrat et d'une couche sur ce substrat, la couche présentant seule alors ces propriétés de transparence et de luminescence. Dans ce cas aussi, les particules du phosphate de terre rare sont contenues dans ladite couche.

Le substrat du matériau est un substrat qui peut être en silicium, à base d'un silicone ou en quartz. Ce peut être aussi un verre ou encore un polymère comme le polycarbonate. Le substrat, par exemple le polymère, peut se présenter sous une forme rigide et d'une feuille ou d'une plaque de quelques millimètres d'épaisseur. Il peut aussi se présenter sous forme d'un film de quelques dizaines de microns voire quelques microns à quelques dixièmes de millimètre d'épaisseur.

Les particules du phosphate de terre rare présentent la plupart des caractéristiques, notamment de taille, qui ont été données plus haut dans la description des dispersions. Ainsi, ce sont des particules d'orthophosphate, nanométriques et donc d'une taille d'au plus 250 nm environ, notamment d'au plus 100 nm, de préférence d'au plus 20 nm et encore plus particulièrement d'au plus 15 nm. Les particules peuvent notamment présenter une taille comprise entre environ 5 nm et environ 20 nm. Ces valeurs sont obtenues ici par analyse par diffraction RX ou par microscopie électronique en transmission sur le matériau massique ou sur la couche.

Ces particules de phosphate présentent aussi un rapport molaire P/Ln supérieure à 1 et compris entre 1,1 et 2 en particulier. De même, on peut retrouver dans les particules les caractéristiques relatives aux différentes variantes qui ont été décrites précédemment au sujet des dispersions. Ainsi, les particules peuvent présenter en surface un phosphate de terre rare, qui peut être plus particulièrement un phosphate de lanthane, un composé à base de silice avec éventuellement un composé polymérique de type organosiloxane.

Comme matériau préparé avec une dispersion selon l'invention, on peut mentionner plus particulièrement celui comprenant des particules d'un phosphate de lanthane et de cérium et des particules d'un phosphate de lanthane, de cérium et de terbium.

Le matériau, et plus particulièrement la couche précitée, peut comprendre en outre des liants ou des charges du type silicate, billes de silice, phosphate, oxyde de titane ou autres charges minérales pour améliorer notamment les propriétés mécaniques et optiques du matériau.

L'épaisseur de la couche peut être comprise entre 30 nm et 10 $\mu$m, de préférence entre 100 nm et 3 $\mu$m.

Le matériau est transparent. Cette transparence est mesurée par le coefficient d'absorption tel que défini plus haut au sujet des dispersions, la fraction volumique $c_V$ étant celle de la couche dans un matériau composite et étant calculée pour les particules hors liant ou charge. Le matériau de l'invention, ou la couche dans le cas d'un matériau composite, présente ainsi un coefficient d'absorption d'au plus 160 $cm^{-1}$ et de préférence d'au plus 40 $cm^{-1}$. Enfin, le matéria.u est luminescent dans les conditions d'excitation données plus haut.

Le matériau, sous sa forme composite, peut être obtenu par dépôt sur le substrat, éventuellement préalablement lavé par exemple par un mélange sulfo-chromique, d'une dispersion colloïdale de l'invention. On peut aussi ajouter au moment de ce dépôt, les liants ou charges mentionnés plus haut. Ce dépôt peut être réalisé par une technique de pulvérisation, de « spin-coating » ou de « dip-coating ». Après dépôt de la couche, le substrat est séché à l'air et il peut éventuellement ensuite subir un traitement thermique. Le traitement thermique est réalisé par un chauffage à une température qui généralement est d'au moins 200°C et dont la valeur supérieure est fixée notamment en tenant compte de la compatibilité de la couche avec le susbtrat de manière à éviter notamment des réactions parasites. Le séchage

et le traitement thermique peuvent être conduits sous air, sous atmosphère inerte, sous vide ou encore sous hydrogène.

On notera qu'il est possible de fabriquer des matériaux à plusieurs couches superposées, par exemple contenant chacune un phosphate d'une terre rare différente, par dépôt successif de chacune des couches.

On a vu plus haut que le matériau peut comprendre des liants ou des charges. Il est possible dans ce cas d'utiliser des dispersions qui comprennent elles-mêmes au moins un de ces liants ou de ces charges ou encore des précurseurs de ceux-ci. De ce fait, l'invention couvre aussi les dispersions colloïdales telles que décrites plus haut et qui contiennent en outre ce type de produits. Par exemple on peut ajouter aux dispersions du silicate de tétraméthylammonium, du silicate de lithium ou de l'hexamétaphosphate, à titre de liant.

Le matériau selon la forme massique peut être obtenu par incorporation des particules de phosphate dans une matrice de type polymère par exemple, comme du polycarbonate, du polyméthacrylate ou un silicone.

Le matériau, et plus particulièrement la couche précitée, peuvent comprendre, outre les particules du phosphate, un polyphosphate tel que défini plus haut. La présence de ce polyphosphate dépend du procédé de préparation du matériau. Ainsi, les matériaux obtenus en mettant en oeuvre un séchage uniquement et non suivi d'un traitement thermique ou n'ayant subi qu'un traitement thermique à basse température, pourront en contenir. De même, la structure du phosphate des particules, structure rhabdophane, ne se retrouvera que pour les matériaux n'ayant pas subi de traitement thermique ou seulement un traitement à basse température.

Comme indiqué plus haut, aussi un matériau transparent et luminescent selon un second mode de réalisation peut être obtenu. La partie qui suit de la description concerne plus particulièrement ce matériau selon ce second mode et les moyens nécessaires pour sa fabrication.

On notera ici que ce qui a été dit plus haut quant aux deux formes possibles du matériau, forme massique ou forme composite, s'applique aussi ici pour le matériau selon ce second mode. Dans le cas du matériau sous forme composite, les conditions de transmission s'appliquent à la couche et c'est la couche qui émet la lumière de coordonnées précitées lorsqu'elle est soumise à une excitation. L'excitation concernée ici est comme cela a été défini précédemment, une excitation photonique sous une longueur d'onde d'au plus 380 nm, notamment comprise entre 200 nm et 380 nm.

Ce matériau a comme caractéristique essentielle d'être à la fois transparent et d'émettre dans le blanc.

La transparence, mesurée comme indiqué précédemment pour le matériau selon le premier mode de réalisation, est telle que le matériau, ou la couche dans le cas d'un matériau composite, présente ainsi un coefficient d'absorption d'au plus 160 $cm^{-1}$ et de préférence d'au plus 40 $cm^{-1}$.

Il émet par ailleurs, dans les conditions d'excitation qui viennent d'être mentionnées, une lumière blanche dont les coordonnées trichromatiques ont été données plus haut.

Les coordonnées trichromatiques de cette lumière blanche peuvent être notamment comprises dans le polyèdre défini par les points suivants (x=0,20; y=0,15); (x=0,20; y=0,30); (x=0,49; y=0,32); (x=0,45; y=0,42).

Plus particulièrement, ces coordonnées peuvent être comprises dans le polyèdre défini par (x=0,22; y=0,18); (x=0,22; y=0,31); (x=0,47; y=0,49); (x=0,45; y=0,42).

Encore plus particulièrement, les coordonnées trichromatiques de cette lumière peuvent être égales à celles de la courbe appelée « Black Body Locus (BBL) ». Dans ce cas, le matériau de l'invention permet d'obtenir plus particulièrement des températures de couleur d'émission comprises entre 2700 et 8000K correspondant à des émissions blanches pour l'oeil humain.

La définition et le calcul des coordonnées trichromatiques et celle de la BBL sont présentés dans plusieurs articles dont « Fluorescent Lamp Phosphors » de KH Burter (The Pennsylvania State University Press 1980) p98-107 et « Luminescent Materials » de G Blasse (Springer-Verlag 1994) p109-110.

Comme autre caractéristique, le matériau du second mode comprend des particules nanométriques de composés choisis parmi les vanadates, les phosphates de terre rare, les tungstates et les oxydes de terre rare. Ces composés doivent bien entendu avoir des propriétés de luminescence sous l'excitation définie plus haut et ils doivent être choisis en fonction des cordonnées chromatiques de la lumière qui sera émise par le matériau. Comme vanadate, on peut choisir le vanadate d'yttrium et d'europium. Comme tungstate, on peut mentionner les tungstates de zinc et de calcium. Les phosphates peuvent être choisis parmi le phosphate de lanthane et de cérium et le phosphate de lanthane, de cérium et de terbium. Ainsi, l'invention concerne plus particulièrement un matériau comprenant des particules d'un phosphate de lanthane et de cérium, des particules d'un phosphate de lanthane, de cérium et de terbium, des particules d'un vanadate d'yttrium et d'europium.

Par nanométrique on entend ici les mêmes valeurs de taille que celles données plus haut à savoir une taille d'au plus 250 nm environ, notamment d'au plus 100 nm, de préférence d'au plus 20 nm et encore plus particulièrement d'au plus 15 nm et qui, à titre d'exemple, peut être comprise entre environ 5 nm et environ 20 nm. Ces valeurs sont obtenues selon les méthodes décrites pour le matériau selon le premier mode de réalisation.

Dans le cas particulier d'un matériau selon ce second mode et comprenant au moins un phosphate de terre rare, les particules de phosphate présentent un rapport molaire P/Ln supérieur à 1. Ce rapport peut être d'au moins 1,1, notamment d'au moins 1,2 et encore plus particulièrement d'au moins 1,5. Il peut être par exemple compris entre 1,1 et 2.

Dans le cas de la présence de particules d'un phosphate d'au moins deux terres rares (Ln, Ln'), les particules

de ce phosphate peuvent comprendre en outre en surface un phosphate de terre rare (Ln) qui peut être plus particulièrement un phosphate de lanthane.

Par ailleurs, les particules de phosphate peuvent aussi comprendre un composé à base de silice en surface avec éventuellement un composé polymérique de type organosiloxane et elles peuvent présenter une structure rhabdophane comme indiqué pour le cas du matériau selon le premier mode en fonction du procédé de préparation.

Les autres caractéristiques décrites plus haut pour le matériau selon le premier mode de réalisation, notamment en ce qui concerne le substrat, s'appliquent aussi ici.

On peut utiliser pour la préparation du matériau selon le second mode une dispersion colloïdale telle que décrite plus haut et qui comprend des particules d'un phosphate de lanthane et de cérium et des particules d'un phosphate de lanthane, de cérium et de terbium. Toutefois, cette dispersion contient en outre des particules d'un vanadate d'yttrium et d'europium.

Cette dispersion spécifique peut être obtenue par mélange d'une dispersion selon l'invention et d'une dispersion colloïdale d'un vanadate d'yttrium et d'europium. Les définitions données plus haut sur les termes « dispersion colloïdale » quant aux dispersions de phosphates, s'appliquent aussi ici pour la dispersion de vanadate. De même, la dispersion de vanadate peut présenter les mêmes caractéristiques de taille et de morphologie que celles des dispersions de phosphate.

Ainsi, et de préférence, les particules ont une taille du même ordre de grandeur que celles qui ont été données plus haut pour les dispersions de phosphates. Plus particulièrement, cette taille peut être comprise entre environ 2 nm et environ 15 nm.

Les dispersions colloïdales de vanadate d'yttrium sont connues.

Elles peuvent être préparées notamment à partir d'un mélange de sels d'yttrium et d'europium et d'un complexant. Ce complexant peut être notamment choisi parmi les polyacides-alcools ou leurs sels. Comme exemple on peut mentionner l'acide malique et l'acide citrique. Le mélange est chauffé et on obtient à l'issue du chauffage une dispersion colloïdale qui peut être purifiée par les techniques connues, par exemple par dialyse.

Par ailleurs, les trois variantes qui ont été décrites précédemment s'appliquent aussi aux dispersions de vanadate d'yttrium et d'europium. C'est à dire qu'il est possible d'utiliser une dispersion de vanadate dans laquelle un phosphate de tere rare ou un composé à base de silice est présent en surface des particules de vanadate. De même, ces particules peuvent présenter en outre en surface un composé polymérique de type organosiloxane. Les dispersions de vanadate selon ces variantes peuvent être obtenue en mettant en oeuvre des procédés du même type que ceux qui ont été décrits au sujet des dispersions de phosphates, c'est à dire par addition d'un polyphosphate et d'un sel de terre rare, d'un silicate à une dispersion de vanadate de départ ou d'un composé de type organosilane à une dispersion préalablement traitée avec un silicate.

La dispersion spécifique à base de particules de phosphates et de vanadate qui vient d'être décrite a pour propriété d'être transparente et d'émettre dans le blanc lorsqu'elle est soumise une excitation photonique sous une longueur d'onde d'au plus 380 nm, par exemple de 254 nm.

Le matériau transparent et luminescent selon le second mode de réalisation peut être obtenu par dépôt de cette dispersion spécifique, sur le substrat, de la manière décrite plus haut.

L'utilisation d'une dispersion spécifique de phosphates et de vanadate selon la seconde ou la troisième variante mentionnée ci-dessus et/ou la mise en oeuvre d'un séchage uniquement ou d'un séchage suivi d'un traitement thermique à basse température après le dépôt des dispersions sur le substrat permettra d'obtenir un matériau dont les particules de phosphates présentent au moins une des caractéristiques décrites plus haut : structure rhabdophane, présence en surface d'un phosphate de terre rare ou d'un composé à base de silice.

On notera enfin que les matériaux peuvent présenter une fraction volumique élevée (rapport du volume occupé par les particules sur le volume total du matériau ou de la couche dans un matériau composite), c'est à dire qu'elle est d'au moins 40%, plus particulièrement d'au moins 50% et encore plus particulièrement d'au moins 55%.

Un système luminescent qui comprend un matériau du type décrit ci-dessus selon le premier ou le second mode et en outre une source d'excitation qui peut être une source de photons UV, comme une diode UV ou encore une excitation de type Hg, gaz rares ou rayons X est aussi décrit.

Le système peut être utilisé comme dispositif d'éclairage mural transparent, vitrage éclairant ou autre dispositif d'éclairage notamment dans le cas du matériau émettant dans le blanc. Il peut être aussi utilisé comme diode blanche à excitation UV.

Des exemples vont maintenant être donnés.

EXEMPLE 1

Cet exemple concerne une dispersion colloïdale aqueuse transparente de phosphate de lanthane dopé par des ions cérium $Ce^{3+}$ et terbium $Tb^{3+}$.

Une solution aqueuse de chlorures de lanthanide (282,7 mg de $LaCl_3$-$6H_2O$ à 353,35 g/mol, 319,1 mg de $CeCl_3$-$6H_2O$ à 354,56 g/mol et 112,0 mg de $TbCl_3$-$6H_2O$ à 373,37 g/mol, dispersés dans 20mL d'eau déminéralisée)

est mélangée sous agitation à une solution 0,1M de tripolyphosphate de sodium (735,8 mg à 367,9 g/mol dans 20 mL d'eau déminéralisée). La solution limpide obtenue est mise à reflux pendant 3h. Au terme de la réaction, la dispersion obtenue est centrifugée à 11000 tr/min pendant 5 minutes, puis lavée à l'eau déminéralisée. Après lavage, on ajoute 2 mL d'une solution 0,1M d'hexamétaphosphate de sodium (267,4 mg, MW = 1337 g/mol). La dispersion colloïdale est ensuite dialysée 24h dans l'eau déminéralisée (membrane 15kD).

La dispersion colloïdale obtenue est stable et luminescente. Elle peut être concentrée dans des conditions douces (40°C, sous vide primaire) jusqu'à 1 Mol/L (environ 250 g/L).

La transmission de la dispersion pour une épaisseur d'un micron est de 98,2%.

Par diffraction des rayons X, on observe des nanoparticules cristallisées $LnPO_4$ - 0,5 $H_2O$ (Rhabdophane), la longueur de cohérence moyenne des domaines cristallins est de 5 nm.

Par microscopie électronique en transmission, on observe des nanoparticules bien dispersées, de taille de l'ordre de 5 nm, l'écart type est de 3 nm.

Par diffusion dynamique de la lumière, le diamètre hydrodynamique moyen est de 13 nm et l'écart type est de 4 nm.

Par microanalyse sur des échantillons lavés, le rapport molaire phosphore / lanthanides est environ égal à 1,8.

Sous excitation UV (272nm), les colloïdes présentent la luminescence verte caractéristique des ions $Tb^{3+}$. Les coordonnées CIE sont X = 0,34 et Y = 0,58 sous excitation à 272nm.

Le rendement quantique de luminescence, qui est défini comme le rapport entre le nombre de photons émis par les ions cérium et terbium et le nombre de photons absorbés par le cérium est voisin de 40 %.

EXEMPLE 2

Cet exemple concerne une dispersion colloïdale aqueuse transparente de phosphate de lanthane dopé par des ions cérium $Ce^{3+}$.

494,7 mg d'une solution de $LaCl_3$-$6H_2O$ à 353,35 g/mol, 212,7 mg d'une solution de $CeCl_3$-$6H_2O$ à 354,56 g/mol, dispersées dans 20 mL d'eau déminéralisée sont mélangées sous agitation à une solution 0,1M de tripolyphosphate de sodium (735,8 mg à 367,9 g/mol dans 20 mL d'eau déminéralisée). La solution limpide obtenue est mise à reflux pendant 3h. Au terme de la réaction, la dispersion obtenue est centrifugée à 11 000 tr/min pendant 5 minutes, puis lavée à l'eau déminéralisée. Après lavage, ajoute 2 mL d'une solution 0,1M de hexamétaphosphate de sodium (267,4 mg, MW = 1337 g/mol). La dispersion colloïdale est ensuite dialysée 24h dans l'eau déminéralisée (membrane 15kD).

La dispersion colloïdale obtenue est stable et luminescente. Elle peut être concentrée dans des conditions douces (40°C, sous vide primaire) jusqu'à 1 Mol/L (environ 250 g/L).

La transmission de la dispersion pour une épaisseur d'un micron est de 98,2%.

Par diffraction des rayons X, on observe des nanoparticules cristallisées $LnPO_4$ - 0,5 $H_2O$ (Rhabdophane), la longueur de cohérence moyenne des domaines cristallins est de 5 nm.

Par microscopie électronique en transmission, on observe des nanoparticules bien dispersées, de taille de l'ordre de 5 nm, l'écart type est de 3 nm.

Par diffusion dynamique de la lumière, le diamètre hydrodynamique moyen est de 13 nm et l'écart type est de 4 nm.

Par microanalyse sur des échantillons lavés, le rapport molaire phosphore / lanthanides est environ égal à 1,8.

Sous excitation UV (272nm), les colloïdes présentent la luminescence UV-Visible violette caractéristique des ions $Ce^{3+}$. Les coordonnées CIE sont X = 0,17 et Y = 0,01 sous excitation 272nm.

Le rendement quantique de luminescence, qui est défini comme le rapport entre le nombre de photons émis par les ions cérium et lanthane et le nombre de photons absorbés par le cérium est voisin de 70 %. Environ 15% de la luminescence est dans le visible (>380nm).

EXEMPLE 3

Cet exemple concerne une dispersion colloïdale aqueuse transparente de phosphate de lanthane dopé par des ions cérium $Ce^{3+}$ et terbium $Tb^{3+}$ et selon la première variante. Les particules de la dispersion sont enrobées par une couche de $LaPO_4$.

La dispersion colloïdale de l'exemple 1 est ajustée à une concentration de 50 mM en terres rares. Sur 20 mL de cette suspension on ajoute 20 mL d'une solution de tripolyphosphate de sodium à 100 mM (735,8 mg à 367,9 g/mol dans 20mL d'eau déminéralisée). Le mélange est porté à 60°C sous agitation. On ajoute ensuite goutte à goutte très lentement 10 mL d'une solution de chlorure de lanthane (353,35 mg de $LaCl_3$-$6H_2O$ à 353,35 g/mol dans 10mL d'eau desionisée). A la fin de l'addition, le mélange est porté à 90°C pendant 3h puis refroidi. Le mélange est mis à dialyser pendant 24 heures dans l'eau déminéralisée (membrane 15kD). On ajoute ensuite 2 mL d'une solution 0,1 M d'hexamétaphosphate de sodium ( 267,4 mg, MW = 1337 glmol). Le colloïde est ensuite re-dialysé 24 heures dans l'eau déminéralisée (membrane 15kD). La dispersion obtenue peut être concentrée jusqu'à 1M en terres rares (250 g/L).

La transmission de la dispersion pour une épaisseur d'un micron est de 98,0%.

L'existence d'une couche de $LaPO_4$ en surface des particules stabilise le degré d'oxydation 3 du cérium vis à vis d'un traitement oxydant. Cela apparaît dans le test suivant. On ajoute 0,26mL de NaOH 0,1M et 100µL de $H_2O_2$ à 1,5%.pour 1mL de dispersions colloïdales à 15mM selon l'exemple 1 et selon l'exemple 3.

En l'absence de couche de $LaPO_4$ (exemple 1), une proportion des ions $Ce^{3+}$ (>25%) est transformée en ions $Ce^{4+}$. L'existence d'ions $Ce^{4+}$ est classiquement démontrée par l'apparition d'une coloration jaune, c'est-à-dire, par la forte absorption du colloïde dans le bleu (par exemple, absorbance de 0,2 à 400nm).

Dans le cas de l'exemple 3 avec couche de LaPO4, aucune oxydation du Ce n'est visible (absorbance <0,05 à 400 nm).

EXEMPLE 4

Cet exemple concerne la préparation d'un matériau luminescent qui émet dans le vert.

La dispersion colloïdale de l'exemple 3 (1 mL à 40 g/L) est mélangée à une solution de silicate de tétraméthylammonium (1 mL d'une solution commerciale à 15% en masse de silice). Le mélange est déposé sur un substrat par spin-coating (2000tr/min pendant 60 s). Le film est ensuite séché 5 minutes à 60°C à l'étuve. Cinq dépôts successifs sont réalisées. Un séchage final de 1h à 100°C est réalisé.

Un film transparent et luminescent à l'oeil sous excitation U.V. est obtenu. La transmission du film pour une épaisseur d'un micron est de 99,5%.

Sous excitation à 272 nm, le matériau émet en partie dans le vert, avec les coordonnées CIE suivantes : X = 0,34 et Y = 0,58.

EXEMPLE 5

Cet exemple concerne la préparation d'une dispersion transparente et qui émet dans le blanc.

A) Préparation d'une dispersion colloïdale aqueuse transparente de vanadate d'yttrium dopé par des ions europium $Eu^{3+}$

L'ensemble de la synthèse est conduit dans l'eau, à une température de 60°C.

Un complexe de citrate insoluble est d'abord formé par le mélange d'une solution aqueuse de nitrate d'yttrium et d'europium (689,3 mg de $Y(NO_3)_3$ à 383 g/mol et 89,2 mg de $Eu(NO_3)_3$ à 446 g/mol dans 20 mL d'eau déminéralisée) avec une solution aqueuse de citrate de sodium $Na_3C_6O_7H_5$ (441,3 mg à 294 g/mol dans 15 mL d'eau déminéralisée). Le rapport molaire Eu/Y est égal à 10/90 et le rapport citrate de sodium / (Y+Eu) est égal à 0,75/1.

Ensuite, une solution aqueuse de $Na_3VO_4$ de pH 12,6 est préparée (182,9 mg de $Na_3VO_4$ à 121,93 g/mol dans 15mL d'eau déminéralisée). L'addition de cette solution au mélange précédent sous agitation provoque la dissolution du précipité pour un rapport molaire V/(Y+Eu) égal à 0,5/1. La réaction de formation des particules est réalisée pour un rapport molaire V/(Y+Eu) égal à 0,75/1.

Au bout de 30 minutes de réaction à 60°C, le chauffage est arrêté. On obtient alors 50 mL de dispersion colloïdale dont le pH est de 8,7. La suspension obtenue est alors dialysée (membrane de 15 kD) dans de l'eau à pH neutre. Après dialyse, le pH de la dispersion colloïdale est 7,7 et la concentration de l'ordre de $10^{-2}$ $mol.L^{-1}$.

La dispersion est ensuite évaporée à sec dans des conditions douces (40°C sous vide primaire). La poudre alors obtenue se redisperse facilement dans 1 mL d'eau, ce qui permet d'obtenir des dispersions colloïdales de vanadate d'yttrium, transparentes et très concentrées (400 $g.L^{-1}$).

La transmission de la dispersion pour une épaisseur d'un micron est de 97,7%.

Par diffraction des rayons X, on observe des nanoparticules cristallisées $YVO_4$ (structure zircon), la longueur de cohérence moyenne des domaines cristallins est de 8 nm.

Par microscopie électronique en transmission, on observe des nanoparticules bien dispersées, de taille de l'ordre de 8 nm, l'écart type est de 3 nm.

Par diffusion dynamique de la lumière, le diamètre hydrodynamique moyen est de 10 nm et l'écart type est de 3 nm.

Par microanalyse sur des échantillons lavés, le rapport molaire Citrate / Yttrium est voisin de 0,1.

Sous excitation UV (280 nm), les colloïdes présentent la luminescence rouge caractéristique des ions $Eu^{3+}$ (pic d'émission à 617 nm). Les coordonnées CIE sont X = 0,66 et Y = 0,34 sous excitation à 280nm.

Le rendement quantique de luminescence, qui est défini comme le rapport entre le nombre de photons émis par les ions europium et le nombre de photons absorbés par les groupements vanadates, est voisin de 15 %.

B) Préparation de la dispersion mixte

On mélange la dispersion colloïdale luminescente dans le rouge telle qu'obtenue ci-dessus à 40 g/L (0,45 mL), la dispersion colloïdale luminescente dans le vert de l'exemple 4 à 45 g/L (2,1 mL), et la dispersion luminescente dans le violet de l'exemple 2 à 70 g/L (7 mL) ainsi que du silicate de tétraméthylammonium concentré (1,1 mL à [Si] = 0,2 M).

La transmission de la dispersion pour une épaisseur d'un micron est de 97%.

La dispersion colloïdale obtenue est stable et luminesce dans le blanc sous excitation UV à 254 nm. Les coordonnées CIE du mélange sont X = 0,35; Y = 0,35 sous excitation 254 nm.

EXEMPLE 6

Cet exemple concerne un matériau transparent et luminescent dans le blanc.

La dispersion de l'exemple 5 est déposée par spin-coating sur une lamelle de verre (2000 tr/min, 1 minute). Le film est mis à sécher pendant 2h à 50°C. Plusieurs dépôts successifs sont possibles (par exemple 3 dépôts) et l'épaisseur finale du film est de 500 nm: La transmission du film pour une épaisseur d'un micron est de 99,5%. Les couches minces obtenues sont transparentes, homogènes (aucune craquelure) et adhèrent bien au substrat. Le film est luminescent, avec une luminescence blanche sous excitation U.V. à 254 nm. Les coordonnées CIE sont X = 0,35 et Y = 0,35.

EXEMPLE 7

Cet exemple concerne une dispersion organique de particules de $LaPO_4$ enrobées par une couche de silicate et de silane fonctionnalisé.

Une solution commerciale de silicate de sodium de composition massique 24% en $SiO_2$ et 8% en $Na_2O$ est diluée au 1/8. A 50 ml de la solution obtenue est ajouté 50 ml de solution colloïdale transparente de $LaPO_4$ dopé Ce et Tb selon l'exemple 3 et de concentration 0,05 $mol.l^{-1}$. Le mélange obtenu est limpide et son pH est de 11. Après 18 heures d'agitation à température ambiante, la solution est dialysée (membrane de 15kD). Le pH final de la dispersion colloïdale silicatée et dialysée est égal à 9.

A 100 ml de cette dispersion colloïdale silicatée de phosphate de lanthane (0,01 $mol.l^{-1}$, pH=9) est additionné goutte à goutte un mélange de 300 ml d'éthanol et 1,421 mg de 3-(triméthoxysilyl)propyl méthacrylate (TPM, $C_{10}H_{20}O_5Si$, M=248.35g/mol). Le rapport molaire TPM/La est égal à 5.

Le mélange résultant est alors chauffé à reflux pendant 12 heures. A l'issue de ce traitement, l'eau du milieu réactionnel est éliminée par distillation azéotropique avec 400 mL de propane-1-ol.

La transmission de la dispersion pour une épaisseur d'un micron est de 99,1%.

EXEMPLE 8

Cet exemple concerne une dispersion colloïdale aqueuse transparente de phosphate de lanthane.

Une solution aqueuse de chlorure de lanthane (706,7 mg de $LaCl_3$-$6H_2O$ à 353.35g/ dispersés dans 20mL d'eau déminéralisée) est mélangée sous agitation à une solution 0,1M de tripolyphosphate de sodium (735.8 mg à 367.9 g/mol dans 20mL d'eau déminéralisée). La solution limpide obtenue est mise à reflux pendant 3h. Au terme de la réaction, la dispersion obtenue est centrifugée (à 11000 tr/min pendant 5 minutes), puis lavée à l'eau déminéralisée. Après lavage, on ajoute 2 mL d'une solution 0,1M de polyphosphate de sodium (267.4mg, MW = 1337). Le colloïde est ensuite dialysé 24h dans l'eau déminéralisée ( membrane 15kD).

La dispersion colloïdale obtenue est stable.

Par diffraction des rayons X, on observe des nanoparticules cristallisées $LaPO_4$ - 0.5 $H_2O$ (Rhabdophane), la longueur de cohérence moyenne des domaines cristallins est de 5 nm.

Par microscopie électronique en transmission, on observe des nanoparticules bien dispersées, de taille de l'ordre de 5 nm, l'écart type est de 3 nm.

Par diffusion dynamique de la lumière, le diamètre hydrodynamique moyen est de 13 nm et l'écart type est de 4 nm.

Par microanalyse sur des échantillons lavés, le rapport molaire phosphore / lanthanides est égal à 1,8.

Par RMN MAS du $^{31}P$ à 15kHz sur une poudre de particules, on observe le pic correspondant à l'orthophosphate de lanthane constitutif des nanoparticules à -3,2 ppm, et ceux attribuables aux espèces polyphosphates de surface à -12,0 et -20,5 ppm. Ces déplacements chimiques sont donnés par rapport à $H_3PO_4$ 85%.

La largeur de ces pics de polyphosphate suggère la présence de polyphosphate en surface des particules, lié à celles ci, vraisemblablement par complexation et sous la forme de l'anion phosphaté.

EXEMPLE 9

Cet exemple concerne une dispersion colloïdale aqueuse transparente de phosphate de lanthane dopé par des ions europium $Eu^{3+}$.

565,4 mg d'une solution de $LaCl_3$-$6H_2O$ à 353,35 g/mol, 146,6 mg d'une solution de $EuCl_3$-$6H_2O$ à 366,4 g/mol, dispersées dans 20 mL d'eau déminéralisée sont mélangées sous agitation à une solution 0,1 M de tripolyphosphate de sodium (735,8 mg à 367,9 g/mol dans 20 mL d'eau déminéralisée). La solution limpide obtenue est mise à reflux pendant 3h. Au terme de la réaction, la dispersion obtenue est centrifugée à 11 000 tr/min pendant 5 minutes, puis lavée à l'eau déminéralisée. Après lavage, ajoute 2 mL d'une solution 0,1M de hexamétaphosphate de sodium (267,4 mg, MW = 1337 g/mol). La dispersion colloïdale est ensuite dialysée 24h dans l'eau déminéralisée (membrane 15kD).

La dispersion colloïdale obtenue est stable et luminescente. Elle peut être concentrée dans des conditions douces (40°C, sous vide primaire) jusqu'à 1 Mol/L (environ 250 g/L).

Par diffraction des rayons X, on observe des nanoparticules cristallisées $LnPO_4$ - 0,5 $H_2O$ (Rhabdophane), la longueur de cohérence moyenne des domaines cristallins est de 5 nm.

Par microscopie électronique en transmission, on observe des nanoparticules bien dispersées, de taille de l'ordre de 5 nm, l'écart type est de 3 nm.

Par diffusion dynamique de la lumière, le diamètre hydrodynamique moyen est de 13 nm et l'écart type est de 4 nm.

Par microanalyse sur des échantillons lavés, le rapport molaire phosphore / lanthanides est environ égal à 1,8.

Sous excitation UV (272nm), les colloïdes présentent la luminescence rouge caractéristique des ions $Eu^{3+}$.

**Revendications**

1. Dispersion colloïdale, **caractérisée en ce qu'**elle comprend des particules constituées de phosphate d'une ou plusieurs terres rares de structure rhabdophane et d'au moins un polyphosphate lié à celles-ci, les particules ainsi constituées présentant un rapport molaire P/Ln supérieur à 1; les particules étant :

   - des particules d'un phosphate de terre rare (Ln); ou
   - des particules présentant une structure coeur/coquille dans laquelle le coeur est constitué d'un phosphate d'au moins deux terres rares (Ln, Ln') et la coquille d'un phosphate de terre rare (Ln); ou
   - des particules présentant une structure coeur/coquille dans laquelle le coeur est constitué d'un phosphate de terre rare (Ln) et la coquille d'un composé à base de silice; ou
   - des particules présentant une structure coeur/coquille dans laquelle le coeur est constitué d'un phosphate de terre rare (Ln) et la coquille d'un composé à base de silice et d'un composé polymérique de type organosiloxane.

2. Dispersion selon la revendication 1, **caractérisée en ce que** le rapport molaire P/Ln est compris entre 1,1 et 2.

3. Dispersion selon la revendication 1 ou 2, **caractérisée en ce que** les particules présentent une taille moyenne d'au plus 20 nm.

4. Dispersion selon l'une des revendications précédentes, **caractérisée en ce que** le phosphate de terre rare est un phosphate de lanthane et de cérium ou de lanthane, de cérium et de terbium.

5. Dispersion selon l'une des revendications précédentes, **caractérisée en ce que** le polyphosphate est un tripolyphosphate, notamment un trlpolyphosphate alcalin, ou la forme anionique correspondante.

6. Dispersion selon l'une des revendications précédentes, **caractérisée en ce qu'**elle comprend des particules d'un phosphate de lanthane et de cérium, des particules d'un phosphate de lanthane, de cérium et de terbium et **en ce qu'**elle contient en outre des particules d'un vanadate d'yttrium et d'europium;

7. Procédé de préparation d'une dispersion selon l'une des revendications précédentes dans laquelle les particules sont des particules d'un phosphate de terre rare (Ln), **caractérisé en ce qu'**il comporte les étapes suivantes :

   - (a) on forme un milieu comprenant au moins un sel de terre rare et un polyphosphate dans des quantités telles que le rapport P/Ln soit d'au moins 3;
   - (b) on chauffe le milieu ainsi obtenu;
   - (c) on élimine les sels résiduels ce par quoi on obtient une dispersion.

**8.** Procédé selon la revendication 7 pour la préparation d'une dispersion dans laquelle les particules présentent une structure coeur/coquille dans laquelle le coeur est constitué d'un phosphate d'au moins deux terres rares (Ln, Ln') et la coquille d'un phosphate de terre rare (Ln), **caractérisé en ce qu'**il comporte les étapes suivantes :

- (d) on ajoute un polyphosphate à la dispersion obtenue à l'issue de l'étape (c);
- (e) on chauffe le milieu ainsi obtenu;
- (f) on ajoute un sel de la terre rare Ln dans des quantités telles que le rapport molaire P/Ln soit d'au moins 3 et on chauffe le milieu ainsi obtenu;
- (g) on élimine les sels résiduels.

**9.** Procédé selon la revendication 7 pour la préparation d'une dispersion dans laquelle les particules présentent une structure coeur/coquille dans laquelle le coeur est constitué d'un phosphate de terre rare (Ln) et la coquille d'un composé à base de silice, **caractérisé en ce qu'**il comporte les étapes suivantes :

- (h) on ajoute un silicate à la dispersion obtenu à l'issue de l'étape (c);
- (i) on fait subir un mûrissement au milieu ainsi obtenu;
- (j) on élimine les sels résiduels.

**10.** Procédé selon la revendication 9 pour la préparation d'une dispersion dans laquelle les particules présentent une structure coeur/coquille dans laquelle la coquille est à base d'un composé à base de silice et d'un composé polymérique de type organosiloxane, **caractérisé en ce qu'**il comporte les étapes suivantes :

- (k) on ajoute un composé de type organosiloxane à la dispersion obtenue à l'issue de l'étape (j);
- (l) on fait subir un mûrissement au milieu ainsi obtenu.

**11.** Procédé selon l'une des revendications 7 à 10, **caractérisé en ce que** pour éliminer les sels résiduels, on soumet à une centrifugation la dispersion obtenue, on lave le produit issu de la centrifugation et on le redisperse dans l'eau.

## Claims

**1.** Colloidal dispersion, **characterized in that** it comprises particles consisting of a phosphate of one or more rare earths having a rhabdophane structure and of at least one polyphosphate linked to said particles, the particles thus formed having a P/Ln molar ratio of greater than 1 and being:

- particles of a rare-earth (Ln) phosphate; or
- particles having a core/shell structure, in which the core consists of a phosphate of at least two rare earths (Ln, Ln') and the shell consists of a rare-earth (Ln) phosphate; or
- particles having a core/shell structure in which the core consists of a rare-earth (Ln) phosphate and the shell consists of a silica-based compound; or
- particles having a core/shell structure in which the core consists of a rare-earth (Ln) phosphate and the shell consists of a silica-based compound and a polymeric organosiloxane compound.

**2.** Dispersion according to Claim 1, **characterized in that** the P/Ln molar ratio is between 1.1 and 2.

**3.** Dispersion according to Claim 1 or 2, **characterized in that** the particles have a mean size of at most 20 nm.

**4.** Dispersion according to one of the preceding claims, **characterized in that** the rare-earth phosphate is a lanthanum cerium phosphate or a lanthanum cerium terbium phosphate.

**5.** Dispersion according to one of the preceding claims, **characterized in that** the polyphosphate is a tripolyphosphate, especially an alkali metal tripolyphosphate, or the corresponding anionic form.

**6.** Dispersion according to one of the preceding claims, **characterized in that** it comprises lanthanum cerium phosphate particles or lanthanum cerium terbium phosphate particles and **in that** it further contains yttrium europium vanadate particles.

**7.** Method of producing a dispersion according to one of the preceding claims in which the particles are particles of a

rare-earth (Ln) phosphate, **characterized in that** it comprises the following steps:

- (a) a mixture comprising at least one rare-earth salt and a polyphosphate is formed in quantities such that the P/Ln ratio is at least 3;
- (b) the mixture thus obtained is heated; and
- (c) the residual salts whereby a dispersion is obtained are removed.

**8.** Method according to Claim 7 for producing a dispersion in which the particles have a core/shell structure in which the core consists of a phosphate of at least two rare earths (Ln, Ln') and the shell consists of a rare-earth (Ln) phosphate, **characterized in that** it comprises the following steps:

- (d) a polyphosphate is added to the dispersion obtained after step (c);
- (e) the mixture thus obtained is heated;
- (f) a rare-earth (Ln) salt is added in quantities such that the P/Ln molar ratio is at least 3, and the mixture thus obtained is heated; and
- (g) the residual salts are removed.

**9.** Method according to Claim 7 for producing a dispersion in which the particles have a core/shell structure in which the core consists of a rare-earth (Ln) phosphate and the shell consists of a silica-based compound, **characterized in that** it comprises the following steps:

- (h) a silicate is added to the dispersion obtained after step (c);
- (i) the mixture thus obtained undergoes a maturing step; and
- (j) the residual salts are removed.

**10.** Method according to Claim 9 for producing a dispersion in which the particles have a core/shell structure in which the shell is based on a silica-based compound and on a polymeric organosiloxane compound, **characterized in that** it comprises the following steps:

- (k) an organosiloxane-type compound is added to the dispersion obtained after step (j); and
- (l) the mixture thus obtained undergoes a maturing step.

**11.** Method according to one of Claims 7 to 10, **characterized in that**, to remove the residual salts, the dispersion obtained is centrifuged, and the product resulting from the centrifugation is washed and redispersed in water.

**Patentansprüche**

**1.** Kolloidale Dispersion, **dadurch gekennzeichnet, daß** sie Teilchen aus Phosphat eines oder mehrerer Seltenerdmetalle mit Rhabdophanstruktur und mindestens einem daran gebundenen Polyphosphat umfaßt, wobei diese Teilchen ein P/Ln-Molverhältnis von mehr als 1 aufweisen; wobei es sich bei den Teilchen um:

- Teilchen eines Seltenerdmetallphosphats (Ln-Phosphats) oder
- Teilchen mit einer Kern/Schale-Struktur, in der der Kern aus einem Phosphat von mindestens zwei Seltenerdmetallen (Ln, Ln') besteht und die Schale aus einem Seltenerdmetallphosphat (Ln-Phosphat) besteht; oder
- Teilchen mit einer Kern/Schale-Struktur, in der der Kern aus einem Seltenerdmetallphosphat (Ln-Phosphat) besteht und die Schale aus einer Verbindung auf Basis von Siliciumdioxid besteht;
- Teilchen mit einer Kern/Schale-Struktur, in der der Kern aus einem Seltenerdmetallphosphat (Ln-Phosphat) besteht und die Schale aus einer Verbindung auf Basis von Siliciumdioxid und einer polymeren Verbindung vom Organosiloxan-Typ besteht;

handelt.

**2.** Dispersion nach Anspruch 1, **dadurch gekennzeichnet, daß** das P/Ln-Molverhältnis zwischen 1,1 und 2 liegt.

**3.** Dispersion nach Anspruch 1 oder 2, **dadurch gekennzeichnet, daß** die Teilchen eine mittlere Teilchengröße von höchstens 20 nm aufweisen.

4. Dispersion nach einem der vorhergehenden Ansprüche, **dadurch gekennzeichnet, daß** es sich bei dem Seltenerdmetallphosphat um ein Phosphat von Lanthan und Cer oder von Lanthan, Cer und Terbium handelt.

5. Dispersion nach einem der vorhergehenden Ansprüche, **dadurch gekennzeichnet, daß** es sich bei dem Polyphosphat um ein Tripolyphosphat, insbesondere ein Alkalimetalltripolyphosphat, oder die entsprechende anionische Form handelt.

6. Dispersion nach einem der vorhergehenden Ansprüche, **dadurch gekennzeichnet, daß** sie Teilchen aus einem Phosphat von Lanthan und Cer, Teilchen aus einem Phosphat von Lanthan, Cer und Terbium umfaßt und außerdem Teilchen aus einem Vanadat von Yttrium und Europium enthält.

7. Verfahren zur Herstellung einer Dispersion nach einem der vorhergehenden Ansprüche, in der es sich bei den Teilchen um Teilchen aus einem Seltenerdmetallphosphat (Ln-Phosphat) handelt, **dadurch gekennzeichnet, daß** man:

   - (a) ein Medium bildet, das mindestens ein Seltenerdmetallsalz und ein Polyphosphat in solchen Mengen, daß das P/Ln-Verhältnis mindestens 3 beträgt, umfaßt;
   - (b) das so erhaltene Medium erhitzt;
   - (c) die Restsalze entfernt, wodurch man eine Dispersion erhält.

8. Verfahren nach Anspruch 7 zur Herstellung einer Dispersion, in der die Teilchen eine Kern/Schale-Struktur aufweisen, in der der Kern aus einem Phosphat von mindestens zwei Seltenerdmetallen (Ln, Ln') besteht und die Schale aus einem Seltenerdmetallphosphat (Ln-Phosphat) besteht, **dadurch gekennzeichnet, daß** man:

   - (d) die nach Schritt (c) erhaltene Dispersion mit einem Polyphosphat versetzt;
   - (e) das so erhaltene Medium erhitzt;
   - (f) ein Salz des Seltenerdmetalls Ln in solchen Mengen zugbit, daß das P/Ln-Molverhältnis mindestens 3 beträgt, und das so erhaltene Medium erhitzt;
   - (g) die Restsalze entfernt.

9. Verfahren nach Anspruch 7 zur Herstellung einer Dispersion, in der die Teilchen eine Kern/Schale-Struktur aufweisen, in der der Kern aus einem Seltenerdmetallphosphat (Ln-Phosphat) besteht und die Schale aus einer Verbindung auf Basis von Siliciumdioxid besteht, **dadurch gekennzeichnet, daß** man:

   - (h) die in Schritt (c) erhaltene Dispersion mit einem Silicat versetzt;
   - (i) das so erhaltene Medium einer Alterung unterwirft;
   - (j) die Restsalze entfernt.

10. Verfahren nach Anspruch 9 zur Herstellung einer Dispersion, in der die Teilchen eine Kern/Schale-Struktur aufweisen, in der die Schale auf einer Verbindung auf Basis von Siliciumdioxid und einer polymeren Verbindung vom Organosiloxan-Typ basiert, **dadurch gekennzeichnet, daß** man:

    - (k) die in Schritt (j) erhaltene Dispersion mit einer Verbindung vom Organosiloxan-Typ versetzt;
    - (1) das so erhaltene Medium einer Alterung unterwirft.

11. Verfahren nach einem der Ansprüche 7 bis 10, **dadurch gekennzeichnet, daß** man die erhaltene Dispersion zur Entfernung der Restsalze einer Zentrifugation unterwirft und das bei der Zentrifugation erhaltene Produkt wäscht und in Wasser redispergiert.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0245480 A


### Littérature non-brevet citée dans la description


- **Michael L. Mc CONNELL.** *Analytical Chemistry,* 1981, vol. 53 (8), 1007 A
- **KH Burter.** Fluorescent Lamp Phosphors. The Pennsylvania State University Press, 1980, 98-107
- **G Blasse.** Luminescent Materials. Springer-Verlag, 1994, 109-110